# EUROPEAN PATENT APPLICATION

(11) **EP 4 657 606 A1**
(43) Date of publication of application: **03.12.2025**
(21) Application number: 25161891.4
(22) Date of filing: 05.03.2025
(51) Int. Cl.: H01M 10/613, H01M 10/6554, H01M 10/6556, H01M 50/213, H01M 50/367, H01M 50/503, H01M 50/509

(54) **PRESSURE RELIEF ASSEMBLY, BATTERY MODULE, BATTERY PACK, AND POWERED DEVICE**

(30) Priority: 31.05.2024 CN 202410695734; 31.05.2024 CN 202421225058 U; 31.05.2024 CN 202421225053 U; 30.08.2024 WO PCT/CN2024/115714
(71) Applicant: Eve Energy Co., Ltd., Huizhou, Guangdong 516006 (CN)
(72) Inventor: REN, Chaoju, Huizhou 516006 (CN); HUANG, Yi, Huizhou 516006 (CN); ZHANG, Guojiang, Huizhou 516006 (CN)
(74) Representative: Regimbeau

(57) **Abstract**

Provided are a pressure relief assembly, a battery module, a battery pack, and a powered device. The pressure relief assembly includes a cooling plate (110) and an isolation assembly (120). The cooling plate (110) is configured to cool a cell (210), and a pressure relief inlet (112) is disposed on the cooling plate (110). The isolation assembly (120) is connected to the cooling plate (110) to define a pressure relief cavity (130). A pressure relief outlet (1220) is disposed on the isolation assembly (120), and the pressure relief inlet (112) communicates with the pressure relief outlet (1220) through the pressure relief cavity (130).

## Description

### TECHNICAL FIELD

The present application relates to the technical field of batteries, for example, a pressure relief assembly, a battery module, a battery pack, and a powered device.

### BACKGROUND

The battery pack generally includes a box body and a battery module disposed within the box body, and the battery module includes multiple cells.

A thermal runaway phenomenon may occur in the charge and discharge process of a cell due to an excessively high temperature. In the related art, when a cell is subjected to thermal runaway, the high temperature generated by the discharged high-temperature gas, the pole piece of the cell, the electrolyte, and other substances may spread onto an adjacent cell in a battery module, which has adverse effects on all cells in the battery module, results in an excessively high temperature inside the battery pack, and possibly causes the occurrence of faults such as continuous thermal runaway and short circuits.

### SUMMARY

In a first aspect, an embodiment of the present application provides a pressure relief assembly. The pressure relief assembly includes a cooling plate and an isolation assembly. The cooling plate is configured to cool a cell and is provided with a pressure relief inlet. The isolation assembly is connected to the cooling plate to define a pressure relief cavity, a pressure relief outlet is disposed on the isolation assembly, and the pressure relief inlet communicates with the pressure relief outlet through the pressure relief cavity.

In a second aspect, an embodiment of the present application provides a battery module. The battery module includes at least one cell and the pressure relief assembly described above. A pressure relief structure is disposed on the cell, and the pressure relief structure communicates with the pressure relief inlet.

In a third aspect, an embodiment of the present application provides a battery pack. The battery pack includes a box body and at least one battery module described above. The battery module is disposed within the box body, a whole-pack pressure relief valve is disposed on the box body, and the whole-pack pressure relief valve communicates with the pressure relief outlet.

In a fourth aspect, an embodiment of the present application provides a powered device. The powered device includes a powered component and the battery pack described above. The battery pack is configured to provide electrical energy for the powered component.

The present application provides a pressure relief assembly and a battery module including the pressure relief assembly. In the pressure relief assembly, the cooling plate not only functions as a thermal management of the cell, but also forms the pressure relief cavity by an enclosure with the isolation assembly. When the cell is subjected to thermal runaway, the high-temperature gas, the pole piece of the cell, the electrolyte and other ejecta sprayed by the pressure relief structure inside the cell enter the pressure relief cavity through the pressure relief inlet on the cooling plate, then the ejecta within the pressure relief cavity is discharged out of the battery module through the pressure relief outlet, so that the ejecta of thermal runaway is prevented from being sprayed onto an adjacent cell within the battery module by the cell subjected to thermal runaway. Moreover, the pressure relief channel of the battery module is formed by means of the cooling plate so that the ejecta caused by the thermal runaway of the cell can be cooled, and further the temperature of ejecta sprayed when the battery pack is subjected to thermal runaway is reduced, thereby preventing the high temperature generated by the ejecta of thermal runaway from spreading to the surroundings, avoiding the occurrence of faults such as continuous thermal runaway and short circuits, and improving the usage safety and reliability of the battery module.

The present application further provides a battery pack. The whole-pack pressure relief valve disposed on the box body of the battery pack communicates with the pressure relief outlet of the pressure relief assembly within the box body, the ejecta of the cell subjected to thermal runaway enters the pressure relief cavity through the pressure relief inlet, is discharged to the whole-pack pressure relief valve through the pressure relief outlet, and then discharged to the outside of the battery pack through the whole-pack pressure relief valve. In this manner, the ejecta is prevented from being sprayed onto other cells, other battery modules, and other parts within the battery pack by the cell subjected to thermal runaway. Moreover, the temperature of the ejecta of thermal runaway can be reduced by means of being in contact with the cooling plate, thereby preventing the occurrence of faults such as continuous thermal runaway and short circuits, and greatly improving the thermal safety of the battery pack.

The powered device provided in the present application can avoid the dangerous accidents caused by thermal runaway of the battery pack, and has higher usage safety.

### BRIEF DESCRIPTION OF THE DRAWINGS

FIG. 1 is a schematic structural view of a battery module according to an embodiment of the present application;
FIG. 2 is a schematic exploded view of a battery module according to an embodiment of the present application;
FIG. 3 is a first view of two pressure relief assemblies of a battery module according to an embodiment of the present application;
FIG. 4 is a schematic exploded view of a pressure relief assembly according to an embodiment of the present application;
FIG. 5 is a second view of two pressure relief assemblies of a battery module according to an embodiment of the present application;
FIG. 6 is a first view of a cell according to an embodiment of the present application;
FIG. 7 is a second view of a cell according to an embodiment of the present application;
FIG. 8 is a schematic exploded view of a cooling plate according to an embodiment of the present application;
FIG. 9 is a schematic view illustrating a flow of coolant in a cooling plate of one of the two pressure relief assemblies according to an embodiment of the present application;
FIG. 10 is a schematic view illustrating a flow of coolant in a cooling plate of the other one of the two pressure relief assemblies according to an embodiment of the present application;
FIG. 11 is a schematic structural view of a battery module according to an embodiment of the present application;
FIG. 12 is a first view of a cell module and two cells contact system (CCS) assemblies according to an embodiment of the present application;
FIG. 13 is a second view of a cell module and two CCS assemblies according to an embodiment of the present application;
FIG. 14 is a schematic structural view of a cell module according to an embodiment of the present application;
FIG. 15 is a schematic exploded view of a busbar unit and a cell according to an embodiment of the present application;
FIG. 16 is a schematic exploded view of a busbar unit according to an embodiment of the present application;
FIG. 17 is a schematic view of a busbar according to an embodiment of the present application;
FIG. 18 is a schematic view of a first connection between a busbar unit and a cell according to an embodiment of the present application;
FIG. 19 is a schematic view of a second connection between a busbar unit and a cell according to an embodiment of the present application;
FIG. 20 is a schematic view of a connection between a busbar unit and a cell module according to an embodiment of the present application; and
FIG. 21 is a schematic structural view of a bracket of a CCS assembly according to an embodiment of the present application.

### List of reference numbers

- 100: pressure relief assembly
- 200: cell module
- 300: first communication pipe
- 400: second communication pipe
- 500: CCS assembly
- 110: cooling plate
- 120: isolation assembly
- 130: pressure relief cavity
- 140: supporting member
- 150: first pipe joint
- 160: second pipe joint
- 170: third pipe joint
- 180: fourth pipe joint
- 111: coolant flow channel
- 112: pressure relief inlet
- 113: flat plate
- 114: flow channel plate
- 1140: flow channel protrusion
- 1141: flow channel groove
- 115: coolant inlet
- 116: coolant outlet
- 121: thermal insulation plate
- 122: sealing member
- 1220: pressure relief outlet
- 210: cell
- 211: pressure relief structure
- 212: electrode region
- 213: negative electrode region
- 214: negative electrode end surface
- 215: cylindrical side surface
- 510: bracket
- 520: busbar unit
- 530: acquisition unit
- 511: contoured portion
- 512: bus card slot
- 521: busbar
- 522: insulating thermal insulation portion
- 5211: conductive portion
- 5212: first connection portion
- 5213: second connection portion
- 5214: positioning hole
- 5221: first insulating thermal insulation film
- 5222: second insulating thermal insulation film
- 5223: connection film
- 5221a: first arc-shaped edge
- 5221b: second arc-shaped edge
- 531: acquisition circuit board
- 532: voltage acquisition strip
- 533: connector

### DETAILED DESCRIPTION

The cell mentioned in embodiments of the present application may include a lithium-ion secondary cell, a lithium-ion primary cell, a lithium-sulfur cell, a sodium-ion cell, or a magnesium-ion cell, and the like, which is not limited in the embodiments of the present application. The cell may be in a flat shape, a rectangular shape, a cylinder shape, or other shapes, which is not limited in the embodiments of the present application.

The battery module and the battery pack mentioned in the embodiments of the present application refer to a single physical module including multiple cells to provide a higher voltage and a higher capacity. For the battery pack, the battery pack generally includes a box body configured to encapsulation one or more cells, and the box body may avoid liquid or other foreign objects from affecting the charging or discharging of the cell.

An embodiment of the present application provides a powered device. The powered device includes a battery pack and a powered component. The battery pack may serve as a power supply system of the powered device to provide electrical energy for the powered component, to implement corresponding functions. The powered device may be, but is not limited to, an electric power tool, a battery car, an electric automobile, a ship, a spacecraft, and the like.

The battery pack described in the embodiments of the present application is not limited to be applicable to the above-described powered device, and may also be applicable to all other powered devices that use batteries. For brevity of description, the following embodiments are described by using an example in which the powered device is a vehicle.

The vehicle may be a fuel automobile, a gas automobile, or a new energy automobile, and the new energy automobile may be a pure electric automobile, a hybrid automobile, an extended range automobile, and the like. The battery pack is disposed inside the vehicle, and the battery pack may be disposed at the bottom or the head or the tail of the vehicle. The battery pack may be used for supplying power to the vehicle, for example, the battery pack may be used as an operating power supply of the vehicle. The vehicle may also include a controller and a motor, and the controller is used for controlling the battery pack to supply power to the motor, for example, for operation power requirements during starting, navigation and driving of the vehicle.

An embodiment of the present application provides a battery pack, and the battery pack is applied to the powered device such as the vehicle described above, which makes the powered device have a lower cost and a higher production efficiency. The battery pack includes a box body and at least one battery module disposed inside the box body. The box body is configured to provide an accommodation space for the battery module. In some embodiments, the box body may include a first housing and a second housing which are snap-fitted, and the first housing and the second housing may be connected by means of bolts or welding.

A whole-pack pressure relief valve is disposed on the box body of this battery pack, when the cell is subjected to thermal runaway, ejecta within the cell may be sprayed out through the whole-pack pressure relief valve, whereby the safety is high.

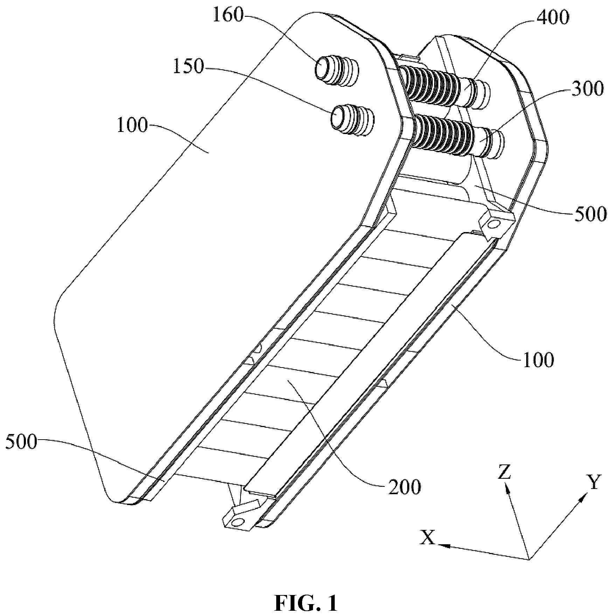

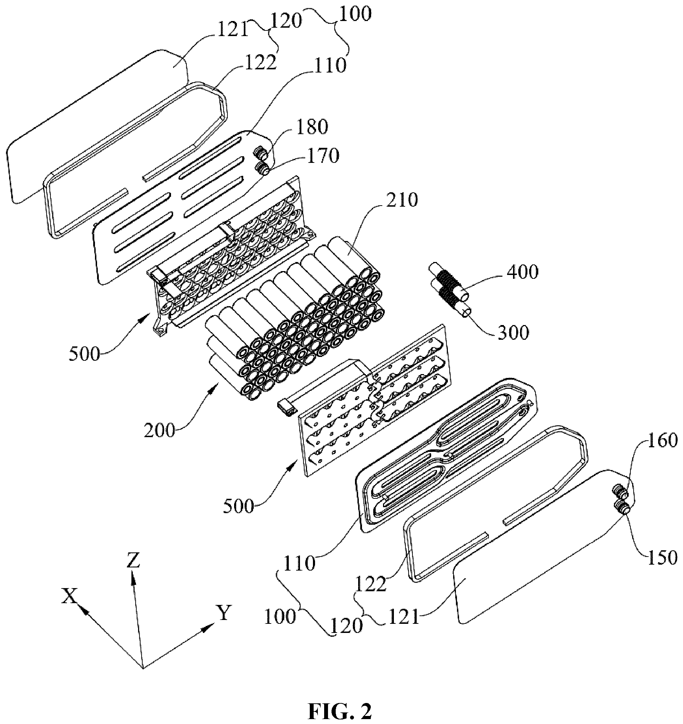

As shown in FIGS. 1 and 2, this embodiment provides a battery module. The battery module includes a cell 210 and a pressure relief assembly 100, where at least one cell 210 is provided. The pressure relief assembly 100 is configured to provide a pressure relief channel for ejecta sprayed when the cell 210 is subjected to thermal runaway and to lead the high-temperature ejecta out of the battery pack.

In some embodiments, multiple cells 210 are arranged to form a cell module 200.

Referring to FIGS. 3, 4 and 5, FIGS. 3, 4 and 5 are schematic structural views of the pressure relief assembly 100 provided in this embodiment. The pressure relief assembly 100 includes a cooling plate 110 and an isolation assembly 120.

The cooling plate 110 is in contact with the cell 210 directly or indirectly and is configured to cool the cell 210, and the isolation assembly 120 is located at a side of the cooling plate 110 away from the cell 210. The cooling plate 110 may cool the cell 210 in a liquid cooling manner, an air cooling manner, or a direct cooling manner. In some embodiments, the cooling plate 110 is provided with a coolant flow channel 111. The coolant flow channel 111 is configured to circulate a coolant medium to cool the cell 210. The coolant medium may be a liquid such as water, a saline solution, or liquid nitrogen, or may be a gas such as cold air or ammonia gas, as long as it may flow within the coolant flow channel 111 to cool the cell 210.

A pressure relief inlet 112 is disposed on the cooling plate 110, and a high-temperature substance sprayed when the cell 210 is subjected to thermal runaway may enter the pressure relief inlet 112. The isolation assembly 120 is connected to the cooling plate 110 to define a pressure relief cavity 130. A pressure relief outlet 1220 is disposed on the isolation assembly 120, and the pressure relief inlet 112 communicates with the pressure relief outlet 1220 through the pressure relief cavity 130. The isolation assembly 120 plays the isolation function of the high-temperature ejecta to prevent the ejecta from splashing onto other components within the battery pack.

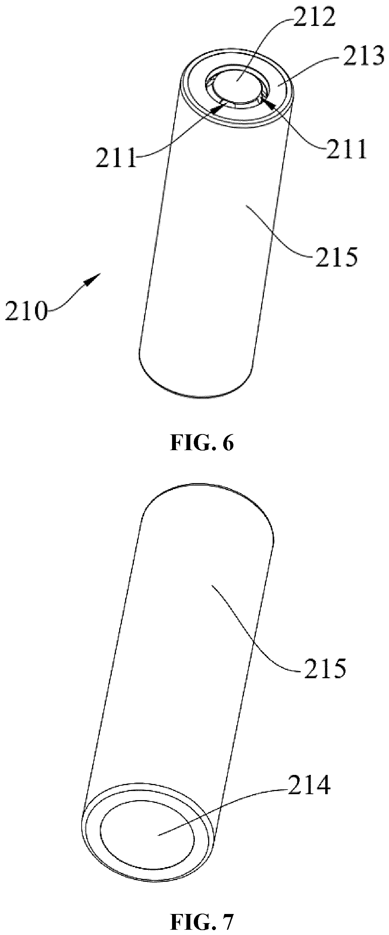

Referring to FIGS. 6 and 7, FIGS. 6 and 7 are schematic structural views of a cylindrical cell 210. A pressure relief structure 211 is disposed on the cell 210 and is directly opposite to and communicates with the pressure relief inlet 112 on the cooling plate 110. The cell 210 has a pressure relief end surface and a negative electrode end surface 214 disposed opposite to each other. The pressure relief end surface is provided with a pole, and the pressure relief structure 211 is also located in a region where the pressure relief end surface is located. A cylindrical side surface of the cell 210 is located between the pressure relief end surface and the negative electrode end surface 214. The pressure relief end surface and the negative electrode end surface 214 described above are also generally referred to as a top surface of the cell 210 and a bottom surface of the cell 210.

In other embodiments, the cell 210 may be rectangular or in other shapes, as long as it is ensured that the pressure relief structure 211 on the cell 210 is directly opposite to and communicates with the pressure relief inlet 112 on the cooling plate 110.

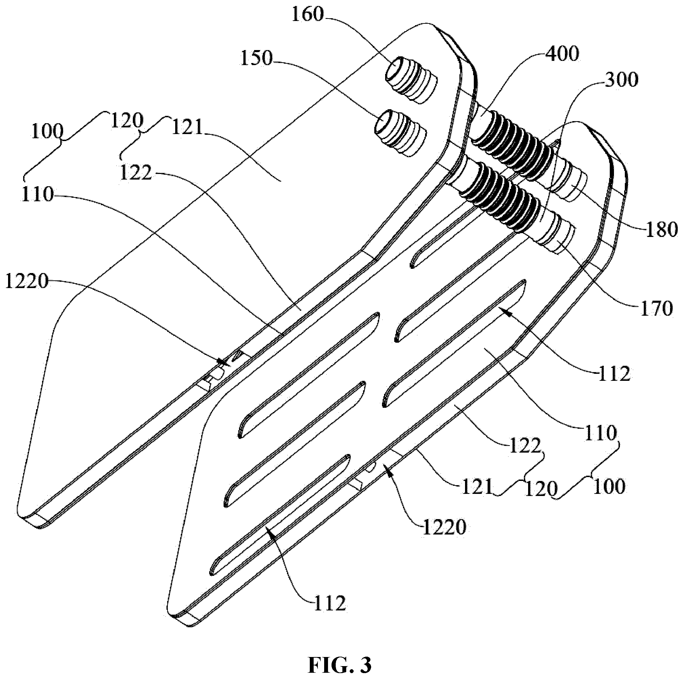

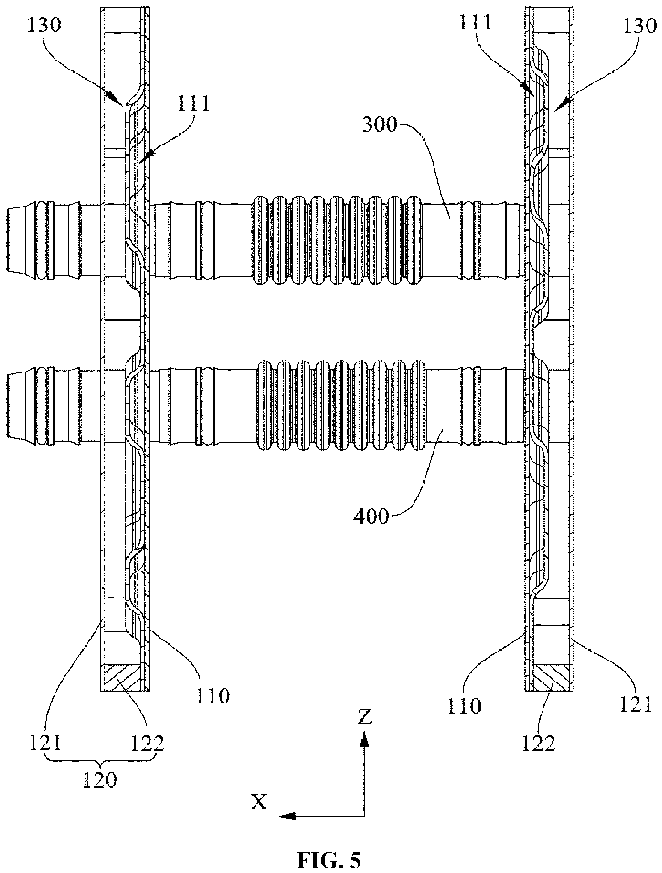

In some embodiments, as shown in FIGS. 3 and 5, the isolation assembly 120 covers the cooling plate 110 to define the pressure relief cavity 130 described above. In the pressure relief assembly 100, not only the cooling plate 110 is used as a thermal management of the cell 210, but also the pressure relief cavity 130 is formed by enclosing the cooing plate 110 and the isolation assembly 120. When the cell 210 is subjected to thermal runaway, the high-temperature gas, the pole piece of the cell, the electrolyte and other ejecta sprayed by the pressure relief structure 211 inside the cell 210 enter the pressure relief cavity 130 through the pressure relief inlet 112 on the cooling plate 110, and then the ejecta within the pressure relief cavity 130 is discharged out of the battery module through the pressure relief outlet 1220, so that the ejecta of thermal runaway is prevented from being sprayed onto an adjacent cell 210 within the battery module by the cell 210 subjected to thermal runaway. Moreover, the pressure relief channel of the battery module is formed by means of the cooling plate 110 so that the ejecta caused by the thermal runaway of the cell can be cooled, and thus the temperature of ejecta sprayed when the battery pack is subjected to thermal runaway is reduced, thereby preventing the high temperature generated by the ejecta subjected to thermal runaway from spreading to the surroundings, avoiding the occurrence of faults such as continuous thermal runaway and short circuits, and improving the usage safety and reliability of the battery module.

In other embodiments, the isolation assembly 120 may also be disposed inside the cooling plate 110. At this time, the isolation assembly 120 itself encloses, inside the cooling plate 110, the above-described pressure relief cavity 130. In this solution, the isolation assembly 120 has certain thermal conductivity, after the ejecta of thermal runaway enters the pressure relief cavity 130 enclosed by the isolation assembly 120, the isolation assembly 120 conducts the high temperature generated by the ejecta of thermal runaway to the cooling plate 110 connected to the isolation assembly 120, so the cooling plate 110 can also cool the ejecta of thermal runaway.

In the battery pack provided by this embodiment, the whole-pack pressure relief valve disposed on the box body of the battery pack communicates with the pressure relief outlet 1220 of the pressure relief assembly 100 within the box body, the ejecta of the cell 210 subjected to thermal runaway enters the pressure relief cavity 130 through the pressure relief inlet 112, and is discharged to the whole-pack pressure relief valve through the pressure relief outlet 1220, and then discharged to the outside of the battery pack through the whole-pack pressure relief valve, so that the ejecta is prevented from being sprayed onto other cells 210, other battery modules, and other parts within the battery pack by the cell 210 subjected to thermal runaway. Moreover, the temperature of the ejecta of thermal runaway can be reduced by means of being in contact with the cooling plate 110, thereby preventing the occurrence of faults such as continuous thermal runaway and short circuits, and greatly improving the thermal safety of the battery pack. The powered device having the battery pack described above can avoid the dangerous accident caused by thermal runaway of the battery pack, and has higher usage safety.

In this embodiment, the pressure relief outlet 1220 is located at the lowest position of the pressure relief cavity 130 so that the high-temperature ejecta within the pressure relief cavity 130 can flow out through the pressure relief outlet 1220 under the action of its own gravity, thereby preventing the high-temperature ejecta from remaining within the pressure relief cavity 130.

In other embodiments, the pressure relief outlet 1220 may not be disposed at the lowest position of the pressure relief cavity, and a corresponding flow channel may be disposed within the battery pack to export the high-temperature ejecta discharged from the pressure relief outlet 1220.

In this embodiment, the level of the pressure relief inlet 112 is higher than the level of the pressure relief outlet 1220 so that the high-temperature ejecta forms a flowing trend from top to bottom, and the high-temperature ejecta within the pressure relief cavity 130 can be prevented from flowing back to the pressure relief inlet 112, thereby preventing the damage to the cell module 200.

In some embodiments, referring to FIGS. 3, 4 and 5, the isolation assembly 120 includes a thermal insulation plate 121 and a sealing member 122. The thermal insulation plate 121 and the cooling plate 110 are arranged at intervals, and the thermal insulation plate 121 is configured to thermally insulate the pressure relief cavity 130 from the outside. The sealing member 122 is annularly disposed on the thermal insulation plate 121 and is in a sealed connection between the cooling plate 110 and the thermal insulation plate 121 so that the pressure relief cavity 130 described above is formed by enclosing the cooling plate 110, the thermal insulation plate 121 and the sealing member 122. This structure can ensure that the pressure relief cavity 130 having a certain thickness is formed, and the sealing member 122 is provided to ensure good sealing of the pressure relief cavity 130 in the circumferential direction, so that the high-temperature ejecta can only be discharged through the pressure relief outlet 1220, and cannot be leaked through a gap between the thermal insulation plate 121 and the sealing member 122 and a gap between the cooling plate 110 and the sealing member 122.

The thermal insulation plate 121 and the sealing member 122 may be of an integrated structure or a separated structure.

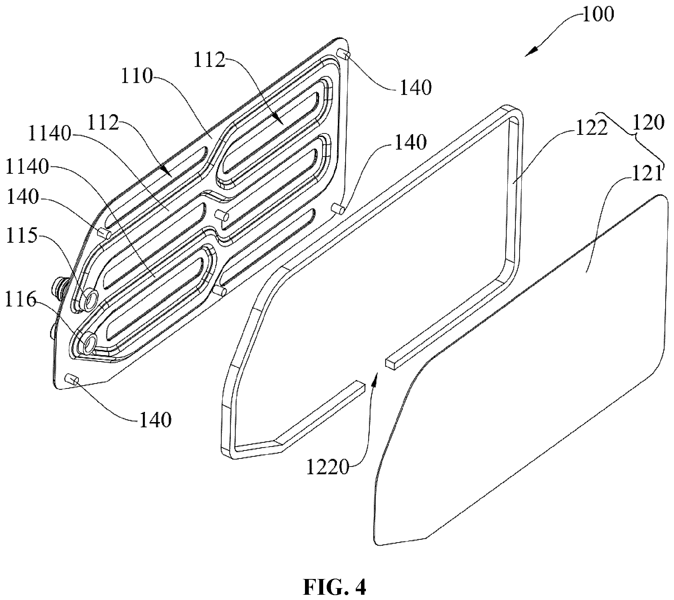

The pressure relief outlet 1220 is disposed on the thermal insulation plate 121 or the sealing member 122. When the battery module has only one pressure relief assembly 100 and the pressure relief assembly 100 is placed transversely so that the thermal insulation plate 121 is located at the bottom-most of the whole battery module, the pressure relief outlet 1220 may be disposed on the thermal insulation plate 121, so the high-temperature ejecta is discharged through the pressure relief outlet 1220 at the bottom-most under the action of its own gravity. When the pressure relief assembly 100 is placed vertically, as shown in FIG. 4, the pressure relief outlet 1220 may be disposed at the bottom-most position of the sealing member 122 so that the high-temperature ejecta is discharged through the pressure relief outlet 1220 at the bottom-most position of the sealing member 122 under the action of its own gravity.

Apparently, in other embodiments, the isolation assembly 120 may only include the thermal insulation plate 121 without the sealing member 122, and in this case, the pressure relief cavity 130 described above is just defined by the thermal insulation plate 121 and the cooling plate 110.

As shown in FIG. 4, in some embodiments, a supporting member 140 is disposed on the thermal insulation plate 121 and/or the cooling plate 110. The supporting member 140 is supported between the thermal insulation plate 121 and the cooling plate 110 so that the thermal insulation plate 121 and the cooling plate 110 are kept to be arranged at intervals, and thus the pressure relief cavity 130 having a certain space can be formed. Moreover, the supporting member 140 is provided so that the strength of the whole pressure relief assembly 100 can be improved, and especially, the compressive strength of the thermal insulation plate 121 and the cooling plate 110 can be improved, thereby preventing the cooling plate 110 and the thermal insulation plate 121 from being deformed.

In some embodiments, the supporting member 140 is a supporting column disposed on the thermal insulation plate 121 or the cooling plate 110, and a cross section of the supporting column may be circular, square or other shapes. Multiple supporting members 140 may be provided and distributed at the middle and two ends of the cooling plate 110 to improve the supporting uniformity.

In some embodiments, the thermal insulation plate 121 is made of metal, such as an aluminum material, an aluminum alloy material, a stainless steel material, a copper material, and a copper alloy material. The thermal insulation plate 121 has high strength and better thermal insulation capability so that the high-temperature ejecta can be effectively blocked, and the high temperature can be blocked within the pressure relief cavity 130, thereby preventing the temperature from spreading to other battery modules and electronic components within the battery pack.

In some embodiments, the thermal insulation plate 121 may also be made of plastic, such as polybutylene terephthalate (PBT) plastic plate, and thus has high strength and better thermal insulation capability.

In some embodiments, the thermal insulation plate 121 may also be made of rubber, especially hard rubber, and thus has good thermal insulation performance while ensuring strength.

Similarly, the sealing member 122 may be made of metal, plastic, or rubber. For example, the sealing member 122 is made of an aluminum material, an aluminum alloy material, a stainless steel material, a copper material, a copper alloy material, a PBT material, or a hard rubber material, and has high strength and better thermal insulation capability, so that the sealing member can be prevented from being burst by pressure during pressure relief caused by the thermal runaway, thereby improving the usage safety.

In this embodiment, the sealing member 122 is a rubber ring so that the sealing performance between the thermal insulation plate 121 and the cooling plate 110 after the thermal insulation plate 121 is connected to the cooling plate 110 can be ensured. Moreover, the sealing member 122 has a certain shock-resistant and impact-resistant effect, preventing the connection between the thermal insulation plate 121 and the cooling plate 110 from being disconnected.

The cooling plate 110 may be made of an aluminum material, an aluminum alloy material, a stainless steel material, a copper material, and a copper alloy material, and has high strength and strong thermal conductive capability, whereby the cooling speed of the cell 210 can be improved.

In some embodiments, when the sealing member 122, the cooling plate 110, and the thermal insulation plate 121 are all made of metal, the cooling plate 110 and the sealing member 122, and the thermal insulation plate 121 and the sealing member 122 may be connected by welding, or may be connected by bonding, for example, with a strong adhesive. When the sealing member 122 and/or the thermal insulation plate 121 is made of plastic or rubber, the cooling plate 110 and the sealing member 122, and the thermal insulation plate 121 and the sealing member 122 may be connected by bonding, for example, connected by bonding using a strong adhesive.

In some embodiments, a thermal insulation layer may also be disposed in a covering manner on two sides of the thermal insulation plate to improve the thermal insulation capability of the thermal insulation plate. In some embodiments, the thermal insulation layer may be made of a silicate fiber material.

Referring to FIG. 4, a flow channel protrusion 1140 is convexly disposed on a side of the cooling plate 110 facing the isolation assembly 120. The flow channel protrusion 1140 is provided so that an area of the cooling plate 110 can be enlarged, a contact area between the ejecta of thermal runaway and the cooling plate 110 is increased, and thus the heat dissipation effect of the ejecta of thermal runaway is improved. Furthermore, the flow channel protrusion 1140 is provided so that the strength of the cooling plate 110 can be improved, and the flow channel protrusion 1140 can also have a certain supporting function, whereby the thermal insulation plate 121 is prevented from being greatly deformed towards the cooling plate 110.

The flow channel protrusion 1140 is provided so that a certain turbulent effect is formed on the high-temperature ejecta within the pressure relief cavity 130, the flow roughness of the high-temperature ejecta is increased, the flow time within the pressure relief cavity 130 is prolonged, and thus the contact time between the high-temperature ejecta and the cooling plate 110 is increased, which helps to improve the cooling effect of the high-temperature ejecta.

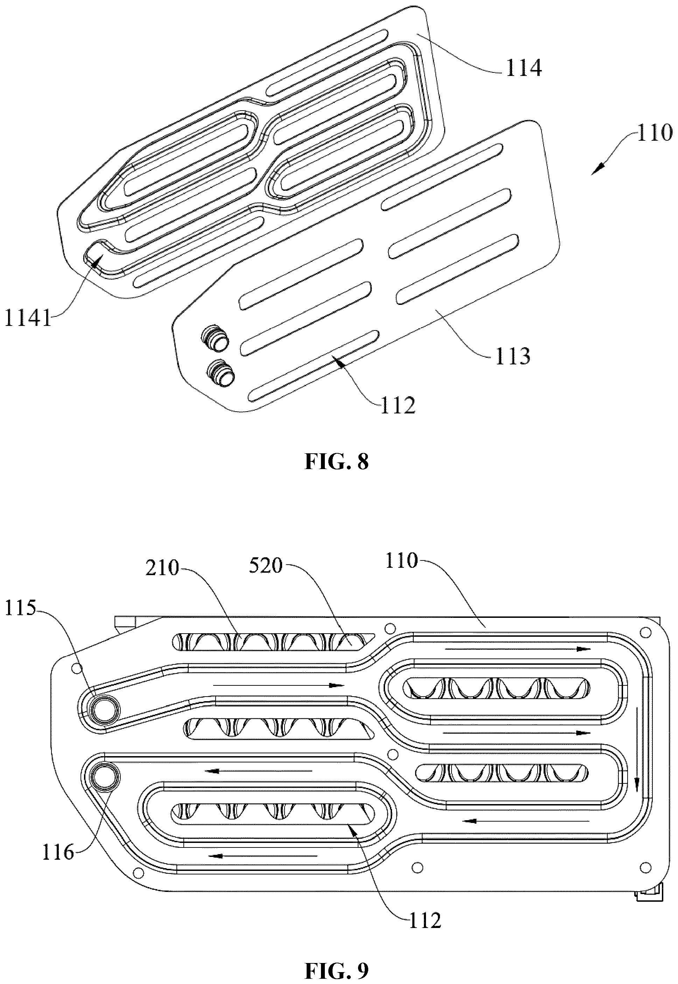

Referring to FIG. 8, in this embodiment, the cooling plate 110 includes a flat plate 113 and a flow channel plate 114 buckled with each other. The flow channel protrusion 1140 described above is disposed on the flow channel plate 114, and a flow channel groove 1141 is formed on a side of the flow channel protrusion 1140 facing the flat plate 113. The coolant flow channel 111 described above is formed by enclosing a groove wall of the flow channel groove 1141 and the flat plate 113. That is, the flow channel plate 114 has a concave-convex structure, for example, the flow channel protrusion 1140 is formed by a punching process, and a back surface of the flow channel protrusion 1140 is the flow channel groove 1141. The flow channel plate 114 is located between the flat plate 113 and the isolation assembly 120 so that the flat plate 113 of the cooling plate 110 faces outwards. The flat plate 113 is in contact with the cell module 200 directly or indirectly through a thermal conductive medium, thereby ensuring that a relatively large contact heat exchange area exists between the flat plate 113 and the cell module 200, and improving the heat exchange effect. Furthermore, the flat plate 113 has a good fit with the cell module 200 to avoid a gap therebetween so that it is ensured that all high-temperature substances sprayed by the cell 210 through the pressure relief structure 211 can enter the pressure relief cavity 130 through the pressure relief inlet 112, thereby avoiding the high-temperature substances from leaking through a gap between the cooling plate 110 and the cell module 200.

As shown in FIGS. 4, 9 and 10, a coolant inlet 115 and a coolant outlet 116 are disposed on the cooling plate 110. The coolant inlet 115 communicates with the coolant outlet 116 through the coolant flow channel 111. The coolant medium enters the coolant flow channel 111 through the coolant inlet 115, and then flows out through the coolant outlet 116, in this way, the circulating flow of the coolant medium in the coolant flow channel 111 is implemented. The coolant inlet 115 and the coolant outlet 116 are each disposed to be connected to a corresponding coolant pipeline. The coolant inlet 115 and the coolant outlet 116 are located at the same end of the cooling plate 110, in this way, the coolant pipelines can be arranged on one end of the cooling plate 110. Therefore, the space for mounting the coolant pipelines is reserved only at one side of the cooling plate 110, whereby the cooling plate 110 and the whole battery module can be reduced in size.

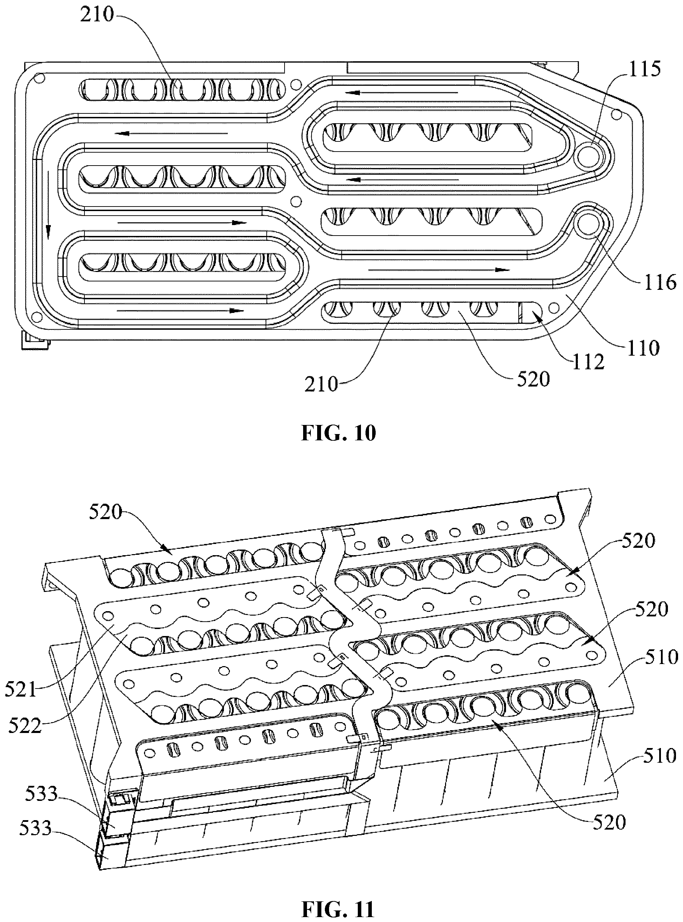

As shown in FIGS. 9 and 10, a flow direction of the coolant medium in the coolant flow channel 111 of the cooling plate 110 is indicated by arrows.

For ease of description, an X direction, a Y direction, and a Z direction are introduced. In this embodiment, an example in which the cell 210 is cylindrical is used. The X direction is an axial direction of the cell 210, the X direction, the Y direction and the Z direction are perpendicular to each other, and the multiple cells 210 are arranged in both the Y direction and the Z direction to form the cell module 200. Apparently, the cell 210 may also be square.

In some embodiments, poles of all cells 210 of the cell module 200 face towards one side, that is, the pressure relief structures 211 face towards one side. In this case, one pressure relief assembly 100 may be disposed only at one side (i.e., the side where the pressure relief end surface is located) of the cell module 200, and the pressure relief structure 211 on each cell 210 is directly opposite to the pressure relief inlet 112 on the pressure relief assembly 100. In this case, only one cooling plate 110 may be disposed on the side of the negative electrode end surface 214 of the cell module 200.

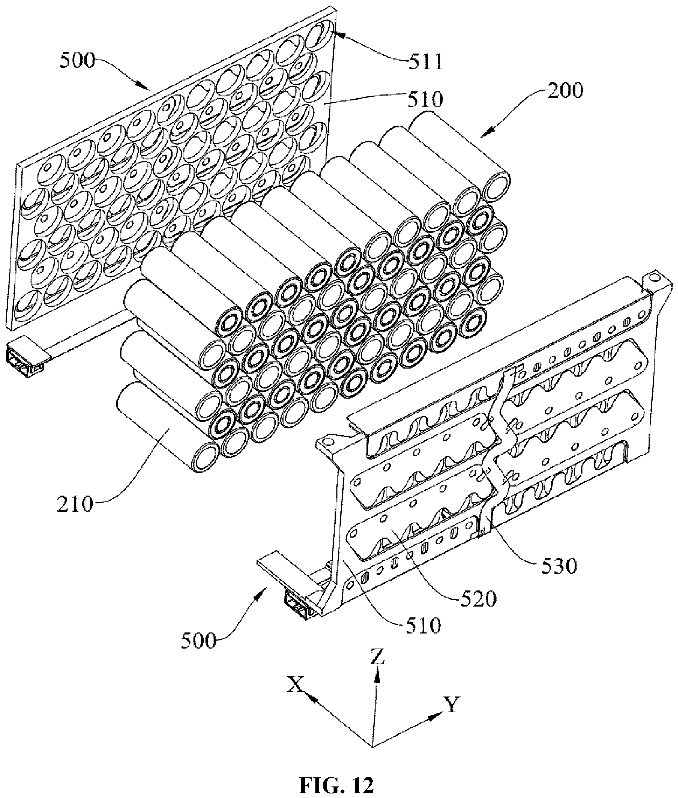

In some embodiments, referring to FIG. 2 and FIG. 12, pressure relief structures 211 of the multiple cells 210 in the cell module 200 are oppositely oriented, that is, pressure relief structures 211 of a part of the cells 210 face towards one side, and pressure relief structures 211 of the other part of the cells 210 face towards the other side. Two pressure relief assemblies 100 are provided and separately disposed on two sides of the multiple cells 210 in the X direction to provide the pressure relief channel for the pressure relief structures 211 on the corresponding side, so that the ejecta when all the cells 210 are subjected to thermal runaway may be discharged through the pressure relief outlet 1220 of the pressure relief assembly 100 on the corresponding side.

In other words, when pressure relief structures 211 of multiple cylindrical cells are differently oriented, the two pressure relief assemblies 100 are respectively located at the two ends of the cylindrical cell in the axial direction of the cylindrical cell so that the high-temperature ejecta sprayed from the pressure relief structures 211 on the two sides may be discharged through the corresponding pressure relief assembly 100.

In the battery module of some other embodiments, the number of pressure relief assemblies 100 may be set according to requirements, for example, the pressure relief assemblies 100 are disposed on a side of the cell module 200 having the pressure relief structure 211, and the number of pressure relief assemblies 100 is not limited herein.

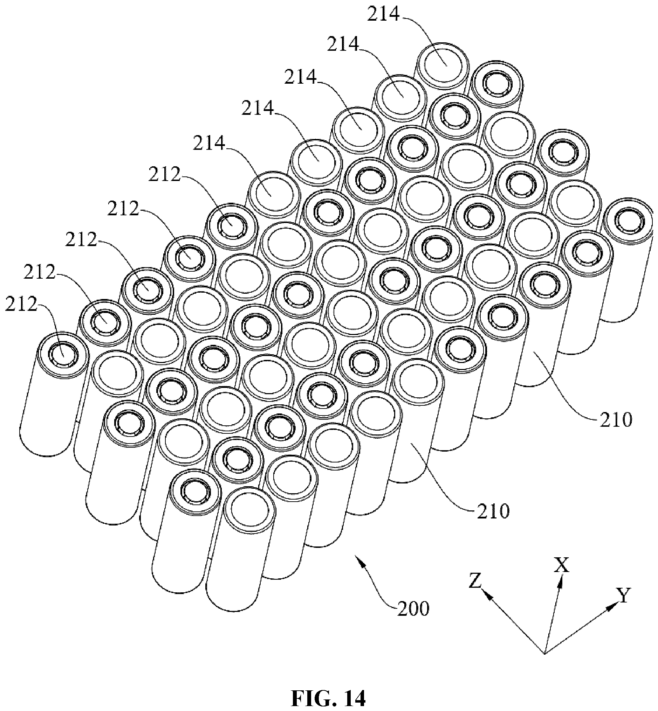

In the above-described embodiments, referring to FIGS. 12 and 14, multiple cells 210 are arranged side by side in the Y direction to form a first cell unit, and multiple cells 210 are arranged side by side in the Y direction to form a second cell unit. Pressure relief structures 211 of the first cell unit are oppositely oriented to pressure relief structures 211 of the second cell unit, for example, in an orientation shown in FIG. 14, the pressure relief end surface of the first cell unit faces upwards, and the negative electrode end surface 214 of the second cell unit faces upwards. Multiple first cell units and multiple second cell units are alternately arranged in sequence. In the Y direction, at least one first cell unit and at least one second cell unit are provided and are alternately distributed in sequence. In the Z direction, at least one first cell unit and at least one second cell unit are provided and are alternately distributed in sequence, in this way, the multiple cells 210 in the cell module 200 are firstly connected in parallel and then connected in series.

In the two pressure relief assemblies 100, each of the two pressure relief assemblies 100 has multiple pressure relief inlets 112. The multiple pressure relief inlets 112 of one of the two pressure relief assemblies 100 face the multiple first cell units, and the coolant flow channel 111 of this one pressure relief assembly 100 faces the second cell units, so that the coolant medium flowing through the negative electrode end surfaces 214 of the second cell units is cooled. Multiple pressure relief inlets 112 of the other one of the two pressure relief assemblies 100 face the multiple second cell units, and the coolant flow channel 111 of the other pressure relief assembly 100 faces the first cell units, so that the coolant medium flowing through the negative electrode end surfaces 214 of the first cell units is cooled.

In other words, in the pressure relief assembly 100 that provides the pressure relief channel for the first cell units, one pressure relief inlet 112 corresponding to each first cell unit is disposed on the cooling plate 110. That is, multiple cells 210 in the first cell unit share one pressure relief inlet 112, which can simplify the manufacturing process and improve the production efficiency.

In the pressure relief assembly 100 that provides the pressure relief channel for the second cell units, one pressure relief inlet 112 corresponding to each second cell unit is disposed on the cooling plate 110, that is, the multiple cells 210 in the second cell unit share one pressure relief inlet 112, which can simplify a manufacturing process and improve production efficiency.

The battery module further includes an elastic tube. The elastic tube is configured to communicate with the cooling plates 110 of the two pressure relief assemblies 100. In this embodiment, the elastic tube communicates with the coolant flow channels 111 of the cooling plates 110. The use of the elastic tube not only achieves the circulation of the coolant medium in the two cooling plates 110, but also enables the elastic tube to generate elastic deformation due to the elastic performance of the elastic tube, so that an assembly tolerance generated when the cell modules are stacked can be absorbed, and the effect of adapting to the installation tolerance of the two pressure relief assemblies 100 is achieved.

Referring to FIG. 1, FIG. 2, and FIG. 3, two elastic tubes are provided and are respectively a first communication pipe 300 and a second communication pipe 400. The first communication pipe 300 communicates with the coolant inlets 115 of the cooling plates 110 of the two pressure relief assemblies 100, and the second communication pipe 400 communicates with the coolant outlets 116 of the cooling plates 110 of the two pressure relief assemblies, to achieve the communication of the cooling plates 110 in the two pressure relief assemblies 100, so that the coolant medium can be introduced from one cooling plate 110 into the other cooling plate 110, thereby saving the pipeline arrangement structure, simplifying the structure and occupying less space.

With continued reference to FIGS. 1, 2 and 3, a first pipe joint 150 and a second pipe joint 160 are disposed on the thermal insulation plate 121 of one pressure relief assembly among the two pressure relief assemblies 100. The first pipe joint 150 is configured to be connected to a liquid inlet pipe for introducing the coolant medium, and the second pipe joint 160 is configured to be connected to a liquid outlet pipe for outputting the coolant medium. The first pipe joint 150 and the second pipe joint 160 penetrate through the thermal insulation plate 121 and communicate with the cooling plate 110 in the pressure relief assembly 100. A third pipe joint 170 and a fourth pipe joint 180 are disposed on the cooling plate 110 of the other pressure relief assembly 100. The third pipe joint 170 is connected to the coolant inlet 115 of the cooling plate 110, and the fourth pipe joint 180 is connected to the coolant outlet 116 of the cooling plate 110. The first pipe joint 150 described above is connected to the third pipe joint 170 through the first communication pipe 300, and the second pipe joint 160 is connected to the fourth pipe joint 180 through the second communication pipe 400, achieving the communication between the cooling plates 110 in the two pressure relief assemblies 100.

In some embodiments, the first communication pipe 300 and the second communication pipe 400 are each a corrugated pipe. The corrugated pipe can effectively absorb the stacking tolerance between the battery modules, and ensure the sealability at the junction of the two cooling plates 110.

In this embodiment, the X direction described above is disposed at an included angle α with respect to a bottom plate of the box body of the battery pack, and α is greater than or equal to 0° and less than or equal to 15°. Namely, after the battery module is mounted in the battery pack, an included angle between the axis of the cylindrical cell and the bottom plate of the box body ranges from 0° to 15°, in some embodiments, the included angle between the axis of the cylindrical cell and the bottom plate of the box body is 0° (when the axis of the cylindrical cell is parallel to the bottom plate of the box body), 1°, 2°, 3°, 4°, 5°, 6°, 7°, 8°, 9°, 10°, 11°, 12°, 13°, 14°, 15°, or the like. In this case, the two pressure relief assemblies 100 are vertically disposed, and the pressure relief outlet 1220 is disposed downwards so that the high-temperature ejecta within the pressure relief cavity 130 can be discharged from the pressure relief outlet 1220 under the action of its own gravity, and finally discharged through the whole-pack pressure relief valve on the box body.

Referring to FIG. 2 and FIG. 11, the battery module further includes an integrated cells contact system (CCS) assembly 500. The CCS assembly 500 includes a bracket 510, a busbar unit 520, and an acquisition unit 530. The busbar unit 520 and the acquisition unit 530 are both mounted on the bracket 510. The busbar unit 520 is electrically connected to the cell 210, for example, the busbar unit 520 and the cell 210 are electrically connected through welding. The acquisition unit 530 is electrically connected to the busbar unit 520 and is configured to acquire a voltage and a temperature signal of the cell module 200.

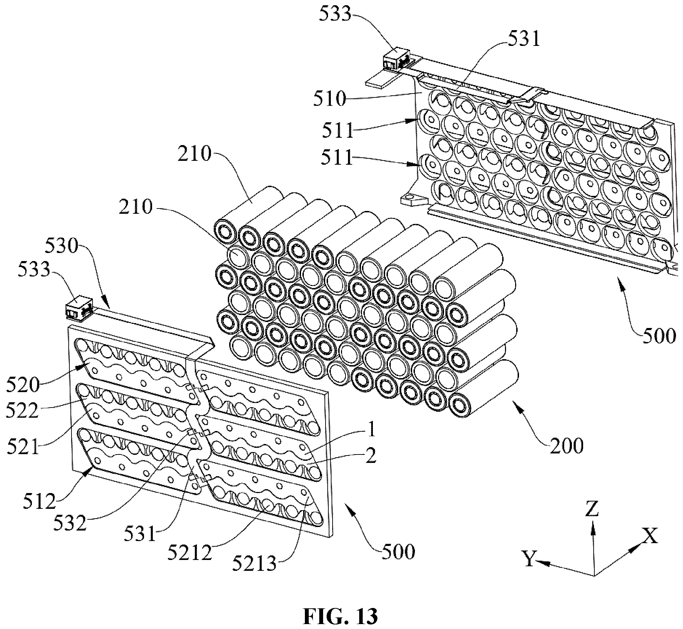

Referring to FIGS. 12 and 13, a contoured portion 511 matching the cell 210 is disposed on the bracket 510, and the cell 210 matches the contoured portion 511 to position and fix the position of the cell 210. The bracket 510 serves as a mounting carrier of the busbar unit 520 and the acquisition unit 530 and also as a carrier of the cell module 200 so that the structure of the battery module is simplified, the production efficiency is greatly improved, and moreover, the material cost of the battery module is greatly reduced.

In some embodiments, the contoured portion 511 is a contoured hole. When the cells 210 are arranged, the cells 210 are placed within the contoured hole.

Since the poles of the multiple cells 210 are oppositely oriented, one CCS assembly 500 is disposed on each of two sides of the cell module 200 in the X direction. Referring to FIGS. 12 and 13, the contoured portions 511 in one-to-one correspondence with the cells 210 are disposed on the brackets 510 of the two CCS assemblies 500. In a stacking process, the stacking of the cell modules 200 may be accomplished by simply arranging the cells 210 according to the contoured portions 511 on the brackets 510 of the CCS assemblies 500. After the stacking is completed, the welding of the busbar unit 520 and the like in the CCS assembly 500 is performed, and then each of the cooling plates 110 in the pressure relief assemblies 100 on two sides is connected to the side of the corresponding CCS assembly 500, whereby the forming process is simple and the stacking process efficiency is improved.

The brackets 510 of the CCS assemblies 500 on two sides are each provided with the contoured portions 511 (in this embodiment, for example, the contoured portions 511 are the contoured holes); therefore, the brackets 510 of the CCS assemblies 500 on two sides may directly support the cells 210 transversely without using a tray to limit the multiple cells 210 so that the parts used in the assembly process of the battery module can be reduced, the assembly process of the battery module can be simplified, and the size of the battery module in the X direction can be reduced, whereby the structure of the battery module is more compact, the occupied space is reduced, and the energy density is improved.

The bracket 510 may be made of plastic.

In this embodiment, the CCS assembly 500 is an integrated module, that is, the bracket 510, the busbar unit 520 and the acquisition unit 530 may be assembled together firstly to form the whole CCS assembly 500, the overall material consumption is achieved, and thus the production tact can be accelerated.

Referring to FIG. 2, the cooling plate 110 of the pressure relief assembly 100 is located on a side of the busbar unit 520 away from the cell 210, and the cooling plate 110 is in contact with the busbar unit 520 directly or indirectly to cool the busbar unit 520 and the cell 210.

In some embodiments, a thermal conductive medium is provided between the cooling plate 110 and the busbar unit 520, which can ensure sufficient contact between the cooling plate 110 and the busbar unit 520, improve the heat exchange efficiency, and cool the busbar unit 520 and the cell 210 rapidly. The thermal conductive medium may be a thermal conductive structural adhesive. The coolant flow channel 111 faces the negative electrode end surface 214 of the cell 210; therefore, the cooling position is the negative electrode of the cell, and the thermal conductive path is as follows: the cooling plate 110 to the thermal conductive structural adhesive to the busbar unit 520 on the CCS assembly 500 to the negative electrode of the cell 210.

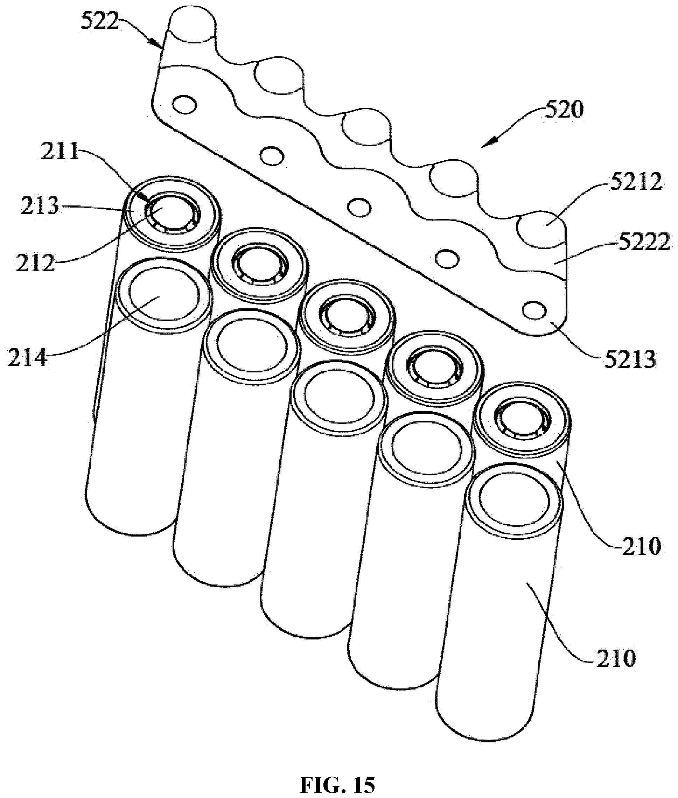

As shown in FIG. 15, FIG. 15 is a schematic structural view of the busbar unit 520 and the cell 210 provided in this embodiment. In conjunction with FIG. 6, one end of the cell 210 is provided with an electrode region 212 located at the same end of the cell 210 as the pressure relief structure 211. That is, one end of the cell 210 is provided with both the electrode region 212 and the pressure relief structure 211.

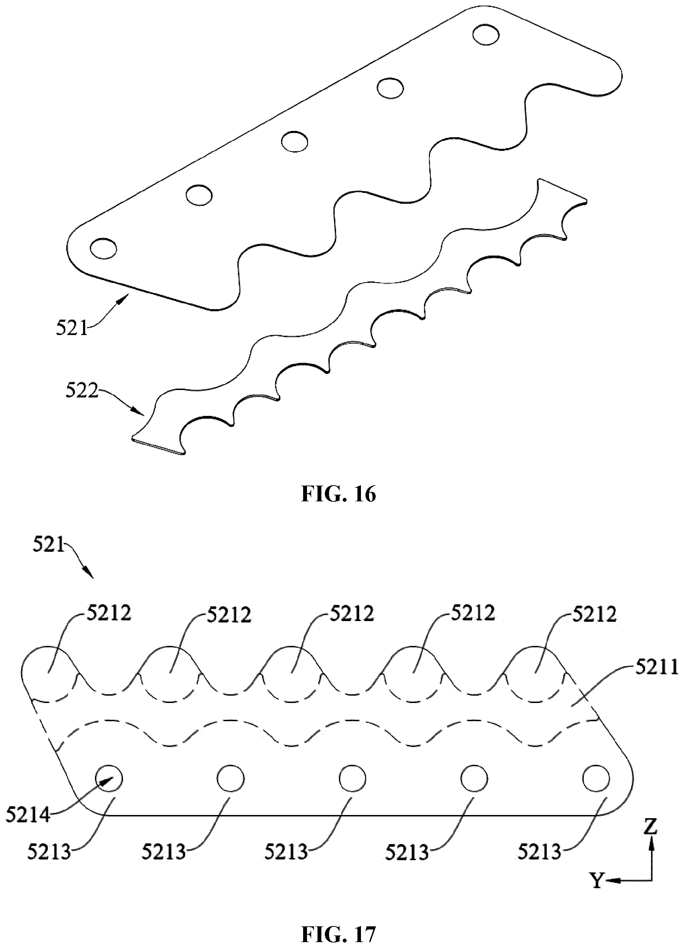

Referring to FIG. 16, the busbar unit 520 includes a busbar 521 and an insulating thermal insulation portion 522. The busbar 521 is made of a metal, such as aluminum, aluminum alloy, copper, and copper alloy, and has better electrical conductivity. The insulating thermal insulation portion 522 may be made of a non-metal material with better insulating and heat resisting properties.

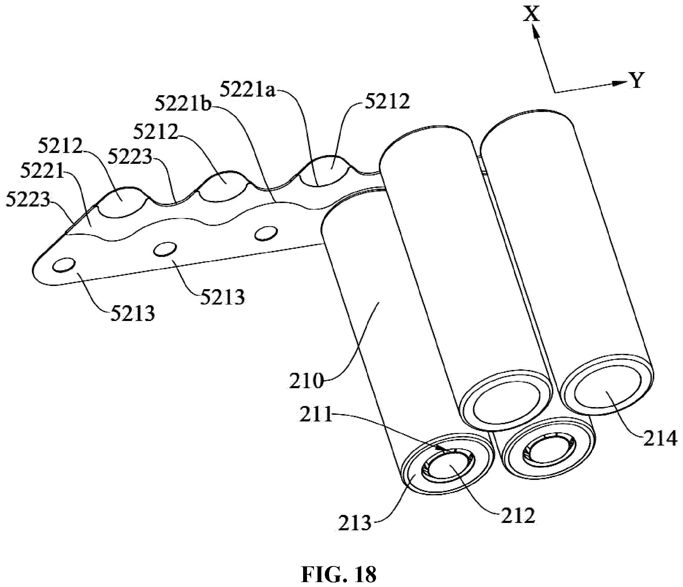

Referring to FIG. 17, the busbar 521 includes a conductive portion 5211 and a first connection portion 5212 connected to each other, and the first connection portion 5212 is disposed on one side of the conductive portion 5211. The first connection portion 5212 is electrically connected to the electrode region 212, for example, the first connection portion 5212 is electrically connected to the electrode region 212 through laser welding. Referring to FIG. 18, the insulating thermal insulation portion 522 includes a first insulating thermal insulation film 5221, the first insulating thermal insulation film 5221 is attached to a side of the conductive portion 5211 facing the cell 210 and faces the pressure relief structure 211, and the pressure relief structure 211 is separated from the conductive portion 5211 through the first insulating thermal insulation film 5221.

The first insulating thermal insulation film 5221 is disposed on the side of the conductive portion 5211 of the busbar 521 facing the cell 210. Due to the thermal insulation blocking function of the first insulating thermal insulation film 5221, when the cell 210 is subjected to thermal runaway, ejecta thereof is sprayed on the first insulating thermal insulation film 5221, thereby preventing the ejecta of thermal runaway from being directly connected to the cell 210 and the busbar 521 to cause the short circuit, avoiding the high temperature from spreading onto the busbar 521, and improving the safety and reliability of the battery pack.

In some embodiments, the electrode region 212 is a positive electrode region or a negative electrode region 213 of the cell 210. For some cells 210, only the positive electrode region and the pressure relief structure 211 are disposed at one end of the cell 210, or only the negative electrode region 213 and the pressure relief structure 211 are disposed at one end of the cell 210. For some other cells 210, the positive electrode region, the negative electrode region 213 and the pressure relief structure 211 are disposed simultaneously at one end of the cell 210. If the first connection portion 5212 of the busbar 521 is connected to the positive electrode region, the first insulating thermal insulation film 5221 isolates the negative electrode region 213 from the conductive portion 5211, and isolates the pressure relief structure 211 from the conductive portion 5211. If the first connection portion 5212 of the busbar 521 is connected to the negative electrode region 213, the first insulating thermal insulation film 5221 isolates the positive electrode region from the conductive portion 5211, and isolates the pressure relief structure 211 from the conductive portion 5211. In this way, a phenomenon that the positive electrode region and the negative electrode region 213 are electrically connected to the busbar 521 simultaneously to cause the short circuit can be prevented, and the high-temperature ejecta sprayed by the pressure relief structure 211 can be isolated.

An example in which the cell 210 is cylindrical is used, for example, a cylindrical cell of model 21700. Referring to FIG. 6, two end surfaces of the cell 210 in the X direction are the pressure relief end surface and the negative electrode end surface 214 respectively. A cylindrical side surface 215 is located between the pressure relief end surface and the negative electrode end surface 214. The pressure relief end surface is provided with the pole and the pressure relief structure 211. The pole is the positive region of the cell 210, and a region annularly disposed outside the pole is the negative electrode region 213. The cylindrical side surface 215 of the cell 210 is also the negative electrode. When the busbar unit 520 provided in this embodiment is connected to the cylindrical cell, the first insulating thermal insulation film 5221 disposed on the busbar 521 can isolate the high-temperature ejecta of thermal runaway sprayed through the pressure relief structure 211, and also isolate the positive electrode region from the negative electrode region 213, thereby preventing a short circuit caused by the positive electrode and the negative electrode being simultaneously connected to the busbar 521.

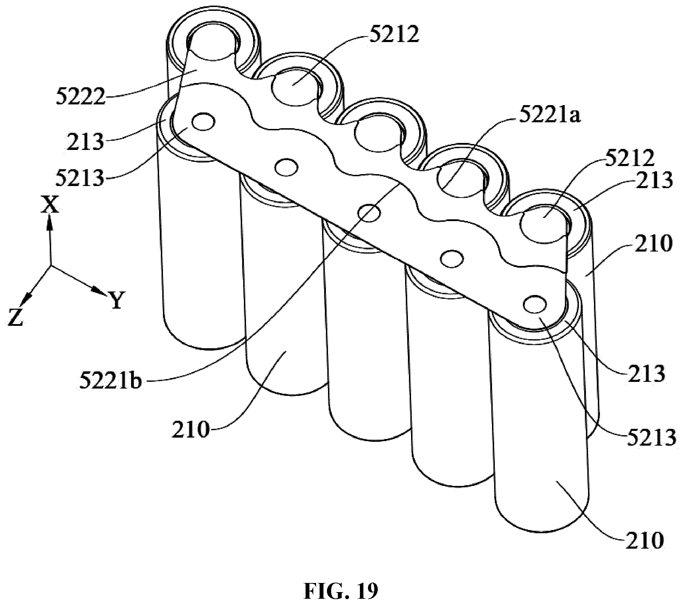

In some embodiments, referring to FIGS. 15 and 19, the insulating thermal insulation portion 522 further includes a second insulating thermal insulation film 5222, and the second insulating thermal insulation film 5222 is attached to a side of the conductive portion 5211 away from the cell 210. The second insulating thermal insulation film 5222 can isolate and block the ejecta of thermal runaway of the cell 210 from a side of the conductive portion 5211 away from the cell 210 so that the cell 210 is prevented from being directly electrically connected to the back surface of the busbar 521 by means of the ejecta of thermal runaway having electrical conductivity, the short circuit phenomenon is avoided, and the high temperature of thermal runaway is prevented from spreading onto the busbar 521.

Referring to FIG. 18, the insulating thermal insulation portion 522 further includes a connection film 5223. The first insulating thermal insulation film 5221 and the second insulating thermal insulation film 5222 on the two sides of the conductive portion 5211 are connected through the connection film 5223, and the connection film 5223 is attached to a side edge of the conductive portion 5211. That is, the insulating thermal insulation portion 522 entirely covers two side surfaces of the conductive portion 5211 and edges of the conductive portion 5211, thereby preventing the ejecta of thermal runaway from being electrically connected to the busbar 521 directly in all directions, preventing the high temperature generated by the ejecta of thermal runaway from spreading onto the busbar 521, avoiding the temperature of the busbar 521 from rising too high, and improving the operational safety and reliability of the battery pack.

In some embodiments, at least one of the first insulating thermal insulation film 5221, the second insulating thermal insulation film 5222 and the connection film 5223 are bonded to the conductive portion 5211, so the connection is firm and convenient and relatively reliable. In this embodiment, the first insulating thermal insulation film 5221, the second insulating thermal insulation film 5222 and the connection film 5223 are all bonded to the conductive portion 5211, for example, an adhesive is disposed on the first insulating thermal insulation film 5221, the second insulating thermal insulation film 5222, and the connection film 5223. After the whole insulating thermal insulation portion 522 and the conductive portion 5211 of the busbar 521 are attached together, a hot pressing process is used, whereby the adhesive on the insulating thermal insulation portion 522 is melted under a high temperature, so that the insulating thermal insulation portion 522 and the conductive portion 5211 of the busbar 521 are firmly bonded together.

At least one of the first insulating thermal insulation film 5221, the second insulating thermal insulation film 5222 and the connection film 5223 is a polyimide (PI) film or a mica paper film. In some embodiments, the first insulating thermal insulation film 5221, the second insulating thermal insulation film 5222, and the connection film 5223 are each a PI film, that is, the whole insulating thermal insulation portion 522 is made of a PI film. The PI film has excellent high-temperature resistance performance and electrical insulation performance, and can effectively block the positive electrode region and the negative electrode region 213 from being electrically connected to the busbar 521 simultaneously, and effectively isolate the ejecta of thermal runway. Alternatively, the first insulating thermal insulation film 5221, the second insulating thermal insulation film 5222 and the connection film 5223 are each a mica paper, that is, the whole insulating thermal insulation portion 522 is made of a mica paper. The mica paper can be used in an environment of 500 degrees Celsius, the ejecta of thermal runaway can be effectively isolated, and the high temperature diffusion is prevented. The mica paper has good insulation performance so that the negative electrode region 213 can be isolated from the conductive portion 5211, or the positive electrode region can be isolated from the conductive portion 5211.

In some embodiments, at least one of the thickness of the first insulating thermal insulation film 5221, the thickness of the second insulating thermal insulation film 5222 and the thickness of the connection film 5223 is greater than or equal to 0.1 mm and less than or equal to 0.5 mm. At least one of the thickness of the first insulating thermal insulation film 5221, the thickness of the second insulating thermal insulation film 5222 and the thickness of the connection film 5223 may be in a range of greater than or equal to 0.1 mm and less than or equal to 0.3 mm. The insulating thermal insulation portion 522 with this thickness range can not only ensure effective insulation between the negative electrode region 213 (or the positive electrode region) and the conductive portion 5211 to prevent the damage caused by breakdown under the action of the spraying pressure of the ejecta from the thermal runaway of the cell 210 due to an excessively thin thickness, but also prevent an increase in the material cost due to an excessively thick thickness. For example, the first connection portion 5212 is connected to the positive electrode region. For cylindrical cells of some models, the positive electrode region and the negative electrode region 213 thereof are in the same plane. If the first insulating thermal insulation film 5221 is set to be too thick, the first insulating thermal insulation film 5221 is sandwiched between the negative electrode region 213 and the conductive portion 5211 so that a gap exists between the first connection portion 5212 and the positive electrode region, whereby the difficulty during welding is increased.

In some embodiments, the thickness of the first insulating thermal insulation film 5221, the thickness of the second insulating thermal insulation film 5222, and the thickness of the connection film 5223 are the same, and the thickness may be 0.1 mm, 0.15mm, 0.2 mm, 0.25 mm, 0.3 mm, 0.35 mm, 0.4 mm, 0.45 mm, 0.5 mm, or the like.

In some embodiments, the cell 210 connected to the busbar 521 is a cylindrical cell shown in FIG. 6 and FIG. 7, the electrode region 212 is the positive electrode region, and the negative electrode region 213 is disposed around an outer periphery of the positive electrode region, and the negative electrode region 213 and the positive electrode region are on the same end surface of the cell 210. The negative electrode end surface 214 and the positive electrode region of the cylindrical cell are disposed at two ends of the cylindrical cell in the axial direction of the cylindrical cell, respectively. As shown in FIG. 17, the busbar 521 further includes a second connection portion 5213, and the second connection portion 5213 and the first connection portion 5212 are disposed on two opposite sides of the conductive portion 5211, respectively. The busbar 521 may be connected to two cylindrical cells oppositely oriented by using the first connection portion 5212 and the second connection portion 5213. The first connection portion 5212 is connected to the positive electrode region of one of the cells 210, and the second connection portion 5213 is electrically connected to the negative electrode end surface 214 of another one of the cells 210.

The electrode region 212 is circular. In the above-described embodiments, the positive electrode region of the cylindrical cell is circular. Referring to FIG. 18 and FIG. 19, a first arc-shaped edge 5221a is disposed on a side of the first insulating thermal insulation film 5221 and/or the second insulating thermal insulation film 5222, and the first arc-shaped edge 5221a is disposed to enclose the electrode region 212, that is, enclose the outside of the positive electrode region. The first arc-shaped edge 5221a may be disposed on both the side of the first insulating thermal insulation film 5221 and the side of the second insulating thermal insulation film 5222, or the first arc-shaped edge 5221a may be disposed on one of the first insulating thermal insulation film 5221 and the second insulating thermal insulation film 5222. The negative electrode end surface 214 is also circular. A second arc-shaped edge 5221b is disposed on a side of the first insulating thermal insulation film 5221 away from the first connection portion 5212 and/or a side of the second insulating thermal insulation film 5222 away from the first connection portion 5212, and the second arc-shaped edge 5221b is disposed around the outside of the negative electrode end surface 214. The above-described second arc-shaped edge 5221b may be disposed on both the first insulating thermal insulation film 5221 and the second insulating thermal insulation film 5222, or may be disposed on only one of the first insulating thermal insulation film 5221 or the second insulating thermal insulation film 5222. A shape size of the first arc-shaped edge 5221a is set to match an outer profile of the positive electrode region, and the second arc-shaped edge 5221b is set to match an outer profile of the negative electrode end surface 214. The first arc-shaped edge 5221a disposed around the positive electrode region and the second arc-shaped edge 5221b disposed around the negative electrode end surface 214 are provided so that the first insulating thermal insulation film 5221 and the second insulating thermal insulation film 5222 can cover, as far as possible, a portion on the busbar 521 not electrically connected to the cell 210, that is, be attached to the whole conductive portion 5211, and the busbar 521 is protected from being not in direct contact with the ejecta of thermal runaway to a relatively large extent. As shown in FIG. 17, a part shown in dashed lines is the conductive portion 5211, and the first insulating thermal insulation film 5221 and the second insulating thermal insulation film 5222 are disposed within the range encircled by the dashed lines.

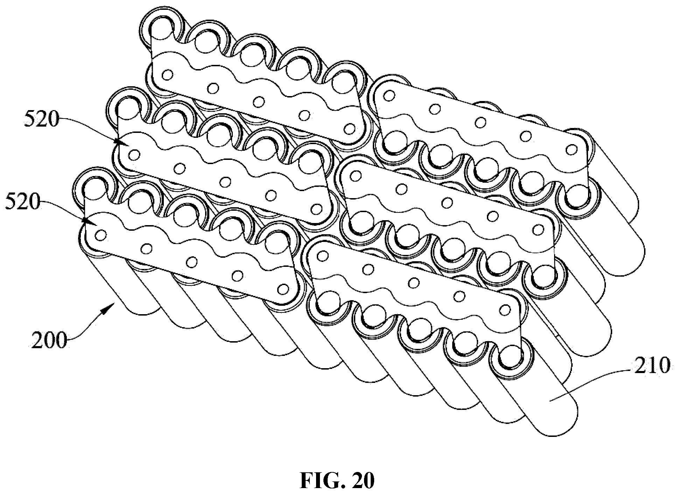

Referring to FIG. 19 and FIG. 20, one busbar 521 may connect two rows of cells 210 with poles differently oriented. The two rows of cells 210 are respectively the first cell unit and the second cell unit. Both the first cell unit and the second cell unit each include multiple cells 210 arranged in the Y direction. The first cell unit and the second cell unit are arranged in the Z direction, and the axial direction of the cell 210 is the X direction. The X direction, the Y direction and the Z direction are perpendicular to each other.

The cells 210 in the first cell unit and the cells 210 in the second cell unit are oppositely oriented. Referring to FIG. 19 and FIG. 20, the first connection portion 5212 and the second connection portion 5213 are respectively disposed on two sides of the conductive portion 5211 in the Z direction, multiple first connection portions 5212 and multiple second connection portions 5213 are disposed in the Y direction, the multiple first connection portions 5212 are in a one-to-one correspondence with the multiple cells 210 of the first cell unit, and the multiple second connection portions 5213 are in a one-to-one correspondence with the multiple cells 210 of the second cell unit. The multiple first connection portions 5212 are connected to multiple positive electrode regions in the first cell unit in one-to-one correspondence, and the negative electrode regions 213 in the first cell unit are separated from the conductive portions 5211 by using the first insulating thermal insulation film 5221. The multiple second connection portions 5213 are connected to the multiple negative electrode end surfaces 214 in the second cell unit in one-to-one correspondence. Both the first insulating thermal insulation film 5221 and the second insulating thermal insulation film 5222 extend in the Y direction, to isolate and block the negative electrode region 213 of each cell 210 from the busbar 521, and isolate and block the ejecta of thermal runaway of each cell 210.

A side of the first connection portion 5212 opposite to the conductive portion 5211 is convexly disposed and is close to a circular shape to match the shape size of the positive electrode region. A groove is formed between two adjacent first connection portions 5212, a bottom wall of the groove is the side edge of the conductive portion 5211, and the connection film 5223 is covered at the bottom wall of the groove. Two ends of the first insulating thermal insulation film 5221 in the Y direction are connected to the second insulating thermal insulation film 5222 through the connection film 5223, to wrap two sides of the conductive portion 5211 in the Y direction.

Referring to FIG. 17, a positioning hole 5214 is disposed in a middle position of the second connection portion 5213. In a process in which the second connection portion 5213 is welded to the negative electrode end surface 214 of the cell 210 to implement the conductive connection, the positioning hole 5214 is used for welding identification to ensure that a welding path is on a design track.

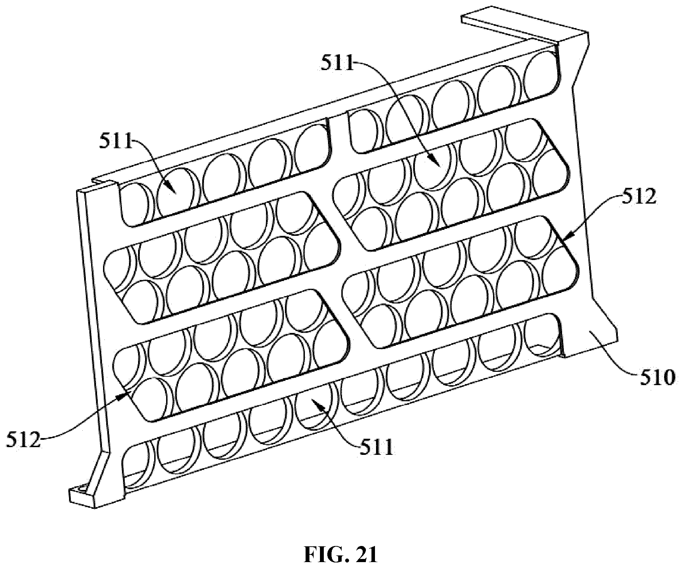

Referring to FIG. 21, a bus card slot 512 is disposed on a side of the bracket 510 away from the cell 210, and the bus card slot 512 is disposed to mount and clamp the busbar unit 520. A shape size of the bus card slot 512 matches with a shape size of the busbar 521, to position and fix the busbar unit 520.

If the busbar 521 is connected only to the negative electrode end surface 214 and is not connected to the positive electrode region, the insulating thermal insulation portion 522 does not need to be disposed, such as a negative output stage busbar 521 shown in the lower left corner of FIG. 11. If the busbar 521 is connected only to the positive electrode region and is not connected to the negative electrode end surface 214, the second connection portion 5213 does not need to be disposed, and a side of the first insulating thermal insulation film 5221 and the second insulating thermal insulation film 5222 away from the first arc-shaped edge 5221a is disposed to be straight, such as a positive output stage busbar 521 shown in the lower right corner of FIG. 11.

As shown in FIG. 11, a busbar 521 located the uppermost is a series long busbar, and this busbar 521 connects to one first cell unit and one second cell unit that are arranged in the Y direction. Correspondingly, one row of first connection portions 5212 and one row of second connection portions 5213 are disposed on the busbar 521. The row of first connection portions 5212 and the row of second connection portions 5213 are disposed in the Y direction, the row of first connection portions 5212 are connected to the positive electrode regions of the first cell unit, and the row of second connection portions 5213 are connected to the negative electrode regions 213 of the second cell unit. In the series long busbar, the insulating thermal insulation portion 522 is disposed just in a corresponding region directly opposite to the first cell unit, and the insulating thermal insulation portion 522 does not need to be disposed in a region directly opposite to the second cell unit.

Referring to FIG. 11 and FIG. 13, the acquisition unit 530 includes an acquisition circuit board 531, a voltage acquisition strip 532, and a connector 533. The acquisition circuit board 531 is exemplarily a flexible printed circuit (FPC) board, multiple voltage acquisition strips 532 are connected to the acquisition circuit board 531, and the voltage acquisition strips 532 are electrically connected to the busbar 521 to acquire the voltage signal. The connector 533 is electrically connected to one end of the acquisition circuit board 531 and used as a data acquisition output interface.

## Claims

1. A pressure relief assembly, comprising:
a cooling plate (110), wherein the cooling plate (110) is configured to cool a cell (210) and is provided with a pressure relief inlet (112); and
an isolation assembly (120), wherein the isolation assembly (120) is connected to the cooling plate (110) to define a pressure relief cavity (130), a pressure relief outlet (1220) is disposed on the isolation assembly (120), and the pressure relief inlet (112) communicates with the pressure relief outlet (1220) through the pressure relief cavity (130).

2. The pressure relief assembly of claim 1, wherein the isolation assembly (120) comprises a thermal insulation plate (121) configured to thermally insulate the pressure relief cavity (130) from an exterior, the thermal insulation plate (121) and the cooling plate (110) are disposed at intervals, and the pressure relief cavity (130) is formed between the thermal insulation plate (121) and the cooling plate (110).

3. The pressure relief assembly of claim 2, wherein a supporting member (140) is disposed on at least one of the thermal insulation plate (121) and the cooling plate (110) and is supported between the thermal insulation plate (121) and the cooling plate (110).

4. The pressure relief assembly of claim 2, wherein the isolation assembly (120) further comprises a sealing member (122) sealingly connected between the cooling plate (110) and the thermal insulation plate (121), wherein the pressure relief cavity (130) is formed by enclosing the cooling plate (110), the thermal insulation plate (121) and the sealing member (122), and the pressure relief outlet (1220) is disposed on the thermal insulation plate (121) or the sealing member (122);
wherein the cooling plate (110) and the sealing member (122) are connected by bonding or welding, or the thermal insulation plate (121) and the sealing member (122) are connected by bonding or welding, or the cooling plate (110) and the sealing member (122) are connected by bonding or welding and the thermal insulation plate (121) and the sealing member (122) are connected by bonding or welding.

5. The pressure relief assembly of any one of claims 1 to 4, wherein the pressure relief outlet (1220) is located at a lowest position of the pressure relief cavity (130), and a level of the pressure relief inlet (112) is higher than a level of the pressure relief outlet (1220).

6. The pressure relief assembly of any one of claims 1 to 4, wherein a flow channel protrusion (1140) is convexly disposed on a side of the cooling plate (110) facing the isolation assembly (120);
wherein the cooling plate (110) comprises a flat plate (113) and a flow channel plate (114) buckled with each other, the flow channel plate (114) is located between the flat plate (113) and the isolation assembly (120), the flow channel protrusion (1140) is convexly disposed on a side of the flow channel plate (114) away from the flat plate (113), and a flow channel groove (1141) is formed on a side of the flow channel protrusion (1140) facing the flat plate (113).

7. A battery module, comprising at least one cell (210) and the pressure relief assembly of any one of claims 1 to 6, wherein a pressure relief structure (211) is disposed on each of the at least one cell (210), and the pressure relief structure (211) communicates with the pressure relief inlet (112).

8. The battery module of claim 7, wherein a plurality of cells (210) are provided, pressure relief structures (211) of the plurality of cells (210) are oriented in an X direction and are disposed to face away from each other, and at least two pressure relief assemblies (100) are provided and disposed on two sides of the plurality of cells (210) in the X direction, separately.

9. The battery module of claim 8, further comprising an elastic tube, wherein two pressure relief assemblies (100) are provided, the elastic tube communicates with cooling plates (110) of the two pressure relief assemblies (100), and the elastic tube is capable of being deformed to match an installation tolerance of the two pressure relief assemblies (100).

10. The battery module of claim 8, wherein among the plurality of cells (210), a plurality of cells (210) are disposed side by side to form a first cell unit, a plurality of cells (210) are disposed side by side to form a second cell unit, pressure relief structures (211) of the first cell unit are oppositely oriented to pressure relief structures (211) of the second cell unit, and a plurality of first cell units and a plurality of second cell units are arranged alternately; and
two pressure relief assemblies (100) are provided, each of the two pressure relief assemblies (100) has a plurality of pressure relief inlets (112), the plurality of pressure relief inlets (112) of one of the two pressure relief assemblies (100) face towards the plurality of first cell units, and the plurality of pressure relief inlets (112) of the other one of the two pressure relief assemblies (100) directly face towards the plurality of second cell units;
wherein the X direction forms an included angle α with a bottom plate of a battery pack, and the included angle α ranges from 0 to 15°.

11. The battery module of any one of claims 7 to 10, wherein the at least one cell (210) is a cylindrical cell, and the at least two pressure relief assemblies (100) are located at two ends of the cylindrical cell in an axial direction of the cylindrical cell, respectively.

12. The battery module of any one of claims 7 to 10, further comprising a busbar unit (520) configured to be electrically connected to the at least one cell (210), wherein the cooling plate (110) is located on a side of the busbar unit (520) away from the at least one cell (210), and the cooling plate (110) is in contact with the busbar unit (520) directly or indirectly;
wherein an end of a cell (210) among the at least one cell (210) is provided with an electrode region (212), the electrode region (212) and the pressure relief structure (211) are located at a same end of the cell (210), and the busbar unit comprises a busbar (521) and an insulating thermal insulation portion (522);
wherein the busbar (521) comprises a conductive portion (5211) and a first connection portion (5212) connected to each other, and the first connection portion (5212) is electrically connected to the electrode region (212);
wherein the insulating thermal insulation portion (522) comprises a first insulating thermal insulation film (5221), the first insulating thermal insulation film (5221) is attached to a side of the conductive portion (5211) facing the cell (210) and faces towards the pressure relief structure (211), and the pressure relief structure (211) is separated from the conductive portion (5211) through the first insulating thermal insulation film (5221);
wherein the insulating thermal insulation portion (522) further comprises a second insulating thermal insulation film (5222), and the second insulating thermal insulation film (5222) is attached to a side of the conductive portion (5211) away from the cell (210);
wherein the insulating thermal insulation portion (522) further comprises a connection film (5223), the first insulating thermal insulation film (5221) and the second insulating thermal insulation film (5222) are connected through the connection film (5223), and the connection film (5223) is attached to a side edge of the conductive portion (5211);
wherein the electrode region (212) is circular, a first arc-shaped edge (5221a) is disposed on a side of at least one of the first insulating thermal insulation film (5221) and the second insulating thermal insulation film (5222), and the first arc-shaped edge (5221a) is configured to enclose the electrode region (212); and
wherein at least one of the first insulating thermal insulation film (5221), the second insulating thermal insulation film (5222), and the connection film (5223) is bonded to the conductive portion (5211); and/or at least one of the first insulating thermal insulation film (5221), the second insulating thermal insulation film (5222), and the connection film (5223) is a polyimide (PI) film or a mica paper film; and/or at least one of a thickness of the first insulating thermal insulation film (5221), a thickness of the second insulating thermal insulation film (5222), and a thickness of the connection film (5223) is greater than or equal to 0.1 mm and less than or equal to 0.5 mm.

13. The battery module of claim 12, further comprising a bracket (510),
wherein the busbar unit (520) is mounted on the bracket (510), a contoured portion (511) matching a cell (210) of the at least one cell (210) is disposed on the bracket (510), and the busbar unit (520) and the bracket (510) are disposed on each of two sides of the at least one cell (210).

14. A battery pack, comprising a box body and at least one battery module of any one of claims 7 to 13, wherein the at least one battery module is disposed inside the box body, a whole-pack pressure relief valve is disposed on the box body, and the whole-pack pressure relief valve communicates with the pressure relief outlet (1220).

15. A powered device, comprising a powered component and the battery pack of claim 14, wherein the battery pack is configured to provide electrical energy for the powered component.
